# FASCICULE DE BREVET EUROPEEN

(11) **EP 0 694 134 B1**
(45) Date de publication et mention de la délivrance du brevet: **06.11.1996**
(21) Numéro de dépôt: 94907583.2
(22) Date de dépôt: 17.02.1994
(51) Int. Cl.: F16D 65/097, F16D 65/54

(54) **ENSEMBLE D'UN ELEMENT DE FRICTION EQUIPE D'UN RESSORT POUR FREIN A DISQUE**
MIT EINER FEDER AUSGERÜSTETER BELAG FÜR EINE SCHEIBENBREMSE
FRICTION ELEMENT ASSEMBLY FITTED WITH A SPRING FOR DISK BRAKES

(30) Priorité: 15.04.1993 FR 9304391
(43) Date de publication de la demande: 31.01.1996
(73) Titulaire: ALLIEDSIGNAL EUROPE SERVICES TECHNIQUES, 93700 Drancy (FR)
(72) Inventeur: LE DEIT, Gérard, F-77181 Courtry (FR)
(86) Numéro de dépôt international: FR9400172
(87) Numéro de publication internationale: WO9424455

(56) Documents cités:
- EP-A- 0 002 150
- EP-A- 0 080 949
- EP-A- 0 112 749
- FR-A- 2 288 911
- FR-A- 2 311 965
- FR-A- 2 334 011
- US-A- 5 069 313

## Description

La présente invention concerne les éléments de friction pour frein à disque, en particulier pour équiper des véhicules automobiles, et plus particulièrement un ensemble composé d'un élément de friction équipé d'un ressort.

L'invention concerne plus particulièrement un ensemble d'un élément de friction équipé d'un ressort anti-bruit, l'élément de friction comprenant une plaque porte-garniture destinée à coopérer en ancrage et à coulissement avec des surfaces de guidage formées sur un organe support de couple d'un frein à disque au moyen d'encoches formées dans les bords latéraux de la plaque porte-garniture, le frein à disque comportant des moyens d'actionnement susceptibles de solliciter l'élément de friction contre un disque tournant, la plaque porte-garniture comportant sur un bord latéral extérieur au niveau d'au moins une des encoches une ouverture de montage du ressort anti-bruit coopérant avec la plaque porte-garniture et l'organe support de couple en direction radiale.

De tels ensembles sont connus, par exemple des documents EP-A-0 080 949 ou EP-A-0 112 749.

Le ressort anti-bruit sollicite en direction sensiblement radiale (par rapport à l'axe du disque de frein) la plaque porte-garniture relativement à l'organe support de couple pour éviter les vibrations de l'élément de friction, génératrices de bruits de claquement et pouvant occasionner un matage des surfaces d'ancrage et de coulissement.

Cependant, il peut arriver, après une action de freinage, que l'élément de friction reste au voisinage immédiat du disque de frein. Un très léger voile de ce dernier le mettra alors périodiquement en contact entre l'élément de friction, causant ainsi des bruits de frottement et une usure prématurée et inégale de l'élément de friction, ainsi qu'un couple, appelé couple résiduel, ralentissant de façon non désirée la rotation de la roue associée au disque de frein.

L'invention a par conséquent pour but de remédier à cet inconvénient.

Dans ce but, l'invention prévoit qu'un organe élastique coopère avec la plaque porte-garniture et l'organe support de couple pour solliciter en direction axiale la plaque porte-garniture en éloignement du disque tournant, cet organe élastique comportant une partie de montage disposée dans une ouverture de montage de la plaque porte-garniture, une partie de maintien coopérant avec la plaque porte-garniture et une partie active coopérant avec l'organe support de couple, et présentant une portion sensiblement trapezoïdale comportant au moins une ouverture dont les côtés non parallèles sont situés de part et d'autre de la plaque porte garniture et coopèrent avec l'organe support de couple et dont une base pénètre dans l'ouverture de montage de la plaque porte-garniture.

L'invention sera mieux comprise, et d'autres buts, caractéristiques et avantages ressortiront clairement de la description qui suit d'un mode de réalisation donné à titre d'exemple non limitatif, en référence aux dessins annexés sur lesquels :
- La Figure 1 représente une vue de face, du côté intérieur, d'un frein à disque pourvu d'ensembles d'éléments de friction réalisés selon l'invention ;
- La Figure 2 est une vue de dessus de frein à disque de la Figure 1, en position de repos ;
- La Figure 3 est une vue de dessus de frein à disque de la Figure 1, lors d'une action de freinage ;
- La Figure 4 est une vue analogue à celle de la Figure 2, le frein à disque étant pourvu d'ensembles d'éléments de friction réalisés selon une variante de l'invention ;
- La Figure 5 est une vue de face montrant un élément de friction pour le frein à disque de la Figure 1 ;
- La Figure 6 est une vue en perspective d'un ressort utilisé sur l'élément de friction représenté sur les Figures 1, 2, 3 et 5 ;
- La Figure 7 est une vue en perspective d'un ressort utilisé sur l'élément de friction représenté sur la Figure 4 ; et
- La Figure 8 est une vue en perspective d'une variante des ressorts représentés sur les Figures 6 et 7.

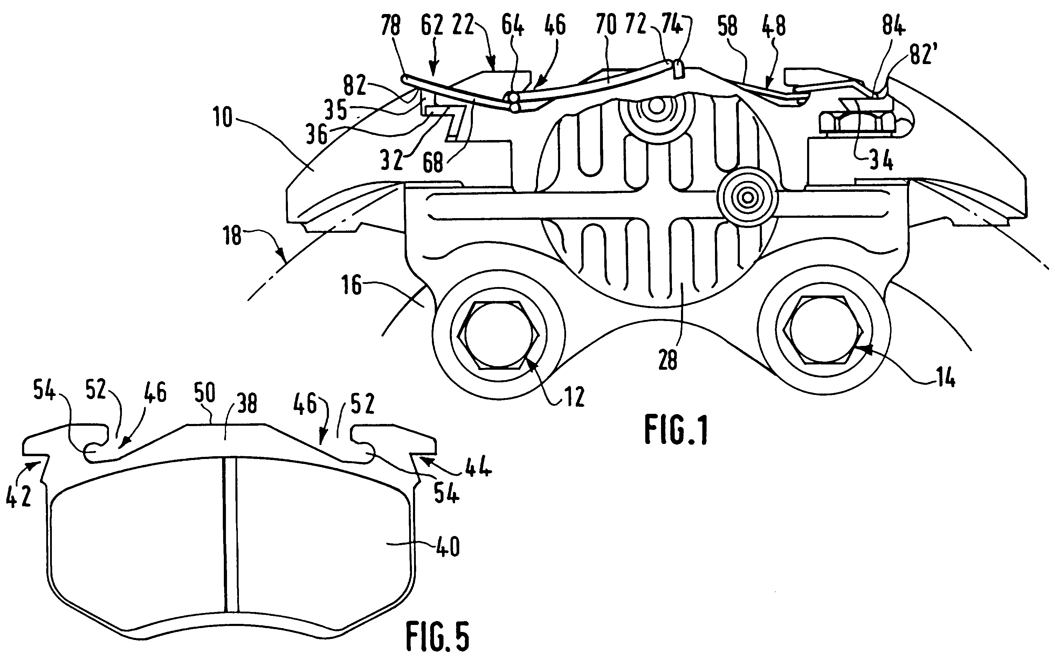

On a représenté sur les Figures 1 à 4 un frein à disque auquel s'appliquent les ensembles d'éléments de friction selon l'invention.

Ce frein est du type comportant un étrier 10 monté coulissant par l'intermédiaire de deux colonnettes axiales 12 et 14 sur un support fixe schématisé en 16, prévu pour être associé à une partie stationnaire du véhicule (non représentée). L'étrier 10 chevauche un disque tournant 18 prévu pour être associé à une roue du véhicule. L'étrier 10 comporte, dans sa partie chevauchant le disque 18, une ouverture 20 délimitée par des bords latéraux s'étendant axialement et joue le rôle d'organe support de couple pour deux éléments de friction 22 et 24.

L'élément de friction intérieur 22 est actionné directement par le piston 26 d'un moteur de frein 28 associé à l'étrier 10, tandis que l'élément de friction extérieur 24 est associé à la partie de réaction 30 de l'étrier 10 de telle sorte qu'il soit appliqué par réaction contre le disque 18 lors de la mise en oeuvre du moteur de frein 28.

Les éléments de friction 22 et 24 sont reçus en ancrage et à coulissement sur les bords circonférentiellement espacés 32 et 34 de l'ouverture 20. Le bord 32 comporte un logement 35 pour une clavette axiale 36 verrouillée au moyen d'une épingle 37. Cette clavette 36 permet l'extraction radiale des éléments de friction 22 et 24 lorsque cette clavette est retirée axialement du frein.

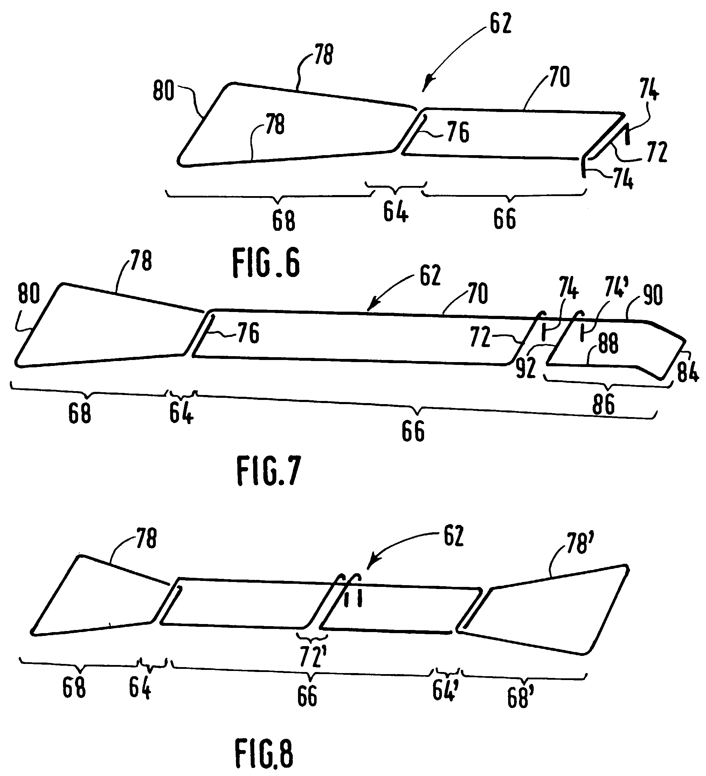

Comme le montre plus particulièrement la Figure 5, chacun des éléments de friction 22 et 24 comporte une plaque porte-garniture 38 sur laquelle est fixée une garniture de friction 40 par exemple par collage. Outre des encoches en forme de V 42 et 44 formées sur les bords radiaux circonférentiellement espacés de la plaque 38, celle-ci comporte deux ouvertures de montage 46 destinées à recevoir un ressort anti-bruit 48 comme le montrent les Figures 1 à 4. Dans le mode de réalisation représenté, les ouvertures de montage 46 sont découpées à partir du bord périphérique extérieur 50 de la plaque porte-garniture 38. Ces ouvertures comportent une première portion de montage 52 évasée dont la partie la plus large est située au niveau du bord périphérique 50 et la partie la moins large débouche dans une portion d'appui 54 ayant la forme d'une portion de cercle.

On remarquera que les éléments de friction sont sensiblement symétriques par rapport au plan radial de symétrie du frein.

Le ressort anti-bruit 48, connu en soi par exemple des documents précités, est formé d'un fil élastique présentant une portion sensiblement rectangulaire 56 dont les grands côtés sont espacés d'une valeur légèrement supérieure à l'épaisseur de la plaque porte-garniture 38, et dont les petits côtés sont espacés d'une valeur légèrement supérieure à la distance entre le fond d'une encoche 42 ou 44 et le fond de l'ouverture de montage 46. Un des petits côtés est reçu dans une ouverture de montage 46, et l'autre petit côté 84 est en appui sur l'étrier 10. Un des grands côtés est prolongé par un brin de ressort 58 coudé à son extrémité pour former une pince 60 en contact avec le bord périphérique extérieur 50 de la plaque porte-garniture 38.

L'élément de friction est également pourvu d'un ressort 62 qui coopère avec la plaque porte-garniture 38 et l'étrier 10.

De façon plus précise, le ressort 62, illustré plus en détail à la Figure 6, est constitué d'une longueur continue de fil métallique élastique, et comporte une partie de montage 64, une partie de maintien 66 et une partie active 68. En position de repos, comme représenté à la Figure 6, le ressort 62 est essentiellement de configuration plane.

La partie de maintien 66 présente une portion sensiblement rectangulaire dont les grands côtés 70 sont espacés d'une valeur légèrement supérieure à l'épaisseur de la plaque porte-garniture 38.

Un des petits côtés 72 est constitué par les deux extrémités du fil métallique constituant le ressort qui se recouvrent, et qui sont chacune terminée par une patte 74 perpendiculaire au plan du ressort au repos, les deux pattes 74 formant ainsi une pince en contact avec le bord périphérique extérieur 50 de la plaque porte-garniture 38. L'autre petit côté 76 du rectangle est constitué par deux portions se recouvrant du fil métallique issues chacune d'un des grands côtés 70, et constitue la partie de montage 64 du ressort, qui est disposée dans l'ouverture de montage 46 de la plaque porte-garniture 38.

La partie active 68 présente une portion sensiblement trapezoïdale. Les côtés non parallèles 78 du trapèze s'étendent chacun à partir d'une des portions du fil métallique formant le petit côté 76 de la partie de maintien 66, qui constitue aussi la partie de montage 64, et qui constitue également une des bases du trapèze formant la partie active 68. Les côtés non parallèles 78 sont d'autre part réunis par l'autre base 80 du trapèze, qui, dans l'exemple représenté, constitue la grande base du trapèze.

La hauteur du trapèze, c'est-à-dire la distance entre les bases 76 et 80, est supérieure, lorsque l'élément de friction est en place dans l'étrier 10, à la distance entre le fond de l'ouverture de montage 46, et l'arête 82 délimitant dans l'étrier 10 le logement 35 de la clavette 36.

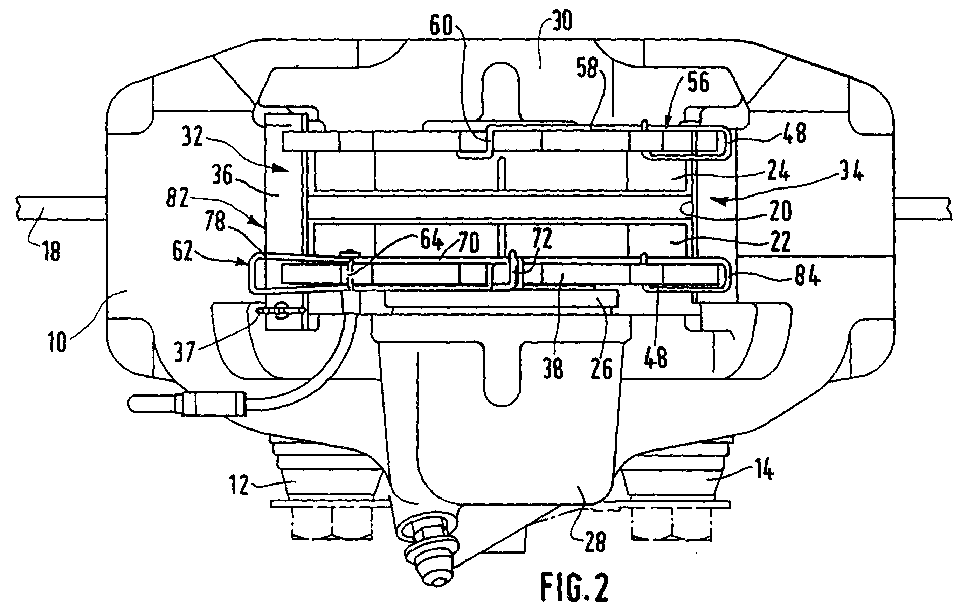

Il découle des explications qui précèdent que, lorsque l'élément de friction 22 équipé du ressort 62 est en place dans l'étrier 10, ainsi qu'il est représenté sur les Figures 1 et 2, la partie de montage 64 du ressort 62 est disposée dans l'ouverture de montage 46 et exerce sur la portion d'appui 54 un effort sensiblement radial dirigé vers l'extérieur de l'étrier 10, alors que le petit côté 72 de la partie de maintien exerce sur le bord périphérique extérieur 50 de la plaque porte-garniture 38 un effort sensiblement radial dirigé vers l'axe du disque de frein, la partie active 68 étant en appui sur l'étrier 10, et plus précisément les côtés non parallèles 78 étant en appui sur l'arête 82 de l'étrier 10 et exerçant sur celle-ci un effort dirigé vers le disque perpendiculairement à leur direction principale.

Au cours d'une action de freinage, du fluide hydraulique sous pression est communiqué au moteur de frein 28, ce qui a pour effet de faire avancer le piston 26 vers l'élément de friction intérieur 22 jusqu'à ce que celui-ci vienne en contact d'une face du disque 18.

A ce moment, par réaction, l'étrier 10 recule en coulissant sur les colonnettes 12 et 14 et vient appliquer l'élément de friction extérieur 24 contre l'autre face du disque 18, pour en ralentir la vitesse de rotation.

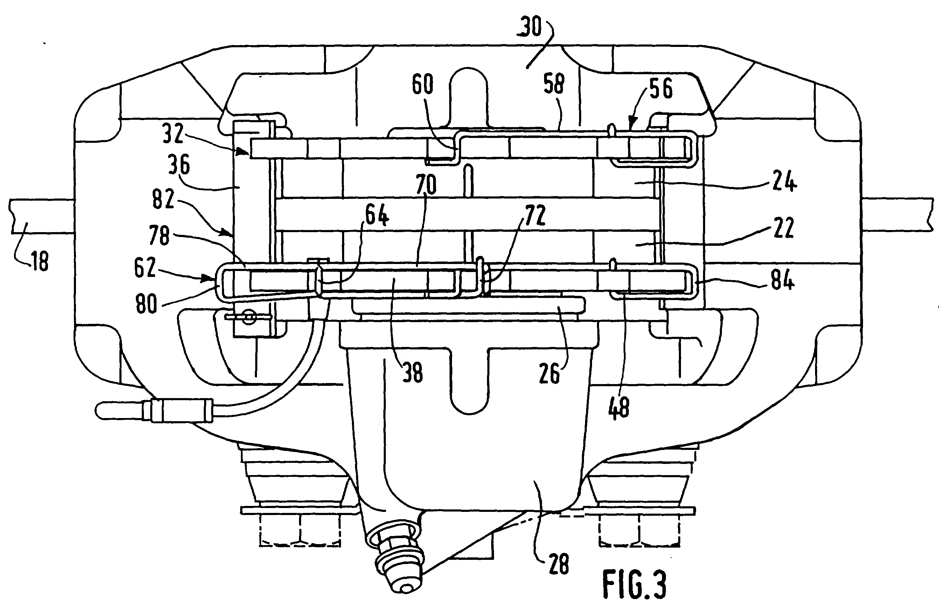

Le frein à disque, équipé de l'ensemble d'élément de friction selon l'invention, se retrouve alors dans la configuration représentée sur la Figure 3, où l'élément de friction intérieur 22 s'est déplacé de sa position de repos représentée sur la Figure 2 dans sa position de travail où il est en contact avec le disque 18.

La partie de montage 64 et la partie de maintien 66 du ressort 62 se sont déplacées avec l'élément de friction 22, la partie de maintien 66 enserrant entre ses côtés 70 la plaque porte-garniture 38.

Par contre, la partie active 68 du ressort 62, dont la base 76, constituant la partie de montage 64 est fixée à l'élément de friction 22, et dont les côtés non parallèles 78 sont en appui sur l'arête 82 de l'étrier 10, se déforme pour adopter la configuration représentée sur la Figure 3. En effet, la rugosité de l'arête 82 combinée à l'effort exercé par les côtés 78 sur cette arête font que ces derniers ne glissent pas sur l'arête 82, contrairement à la partie 84 du ressort anti-bruit 48, qui est en appui sur l'étrier 10, et qui peut glisser sur ce dernier. Il s'ensuit que la partie active 68 est soumise à une contrainte, de direction essentiellement axiale.

Lorsque l'action de freinage est interrompue, la pression hydraulique dans le moteur de frein 28 est abaissée. Le piston 26 rentre alors dans le moteur de frein 28 soit spontanément, soit à l'aide d'un joint de piston approprié connu en soi.

Simultanément, le ressort 62, et en particulier sa partie active 68, tend à reprendre sa configuration de repos. Les côtés 78 de la partie active 68 ne glissant pas sur l'arête 82 pour les mêmes raisons que celles qui ont été exposées plus haut, la contrainte axiale de la partie active 68, consistant principalement en un couple dont l'une des composantes s'exerce sur le côté 76 en éloignement du disque 18 et l'autre composante s'exerce sur l'arête 82 vers le disque 18, se relâche en éloignant le côté 76 du disque de frein 18, et donc en éloignant également les parties de montage 64 et de maintien 66 et par conséquent l'élément de friction 22 du disque de frein.

On voit donc bien que, grâce à l'action du ressort 62, et de sa partie active 68, l'élément de friction est maintenu au contact du piston 26 et est ainsi éloigné du disque lors de la cessation de l'action de freinage. De la sorte, les bruits de frottement en dehors des périodes de freinage, de même qu'une usure inégale de l'élément de friction, et qu'un couple résiduel s'opposant à la rotation libre de la roue associée au disque, sont ainsi évités. La partie active 68 joue le rôle de ressort de rappel de l'élément de friction en position de repos.

Selon une caractéristique avantageuse de l'invention, l'angle formé entre les deux côtés non parallèles 78, ou plus précisément l'angle aigu formé entre le côté 78 le plus proche du disque 18 et le plan de ce disque, est tel qu'il permet à l'élément de friction d'effectuer les mouvements qui viennent d'être décrits lors des actions de freinage et de défreinage, qui correspondent à ce qu'il est convenu d'appeler dans la technique le jeu fonctionnel du frein.

Par contre, par suite de l'usure de la garniture de friction, l'élément de friction peut être amené à se déplacer d'une valeur supérieure au jeu fonctionnel lors d'une action de freinage. Dans cette éventualité, le ressort 62 permet un tel déplacement. En effet, l'angle formé entre le côté 78 le plus proche du disque 18 est le plan du disque est tel que, pour un déplacement de l'élément de friction égal au jeu fonctionnel du frein, le trapèze formant la partie active du ressort 62 se déforme pour adopter sensiblement la forme d'un trapèze rectangle, dans laquelle le côté 78 le plus proche du disque 18 est perpendiculaire à la base 76 du trapèze, et donc parallèle au plan du disque 18, et donc en contact avec la face extérieure de la plaque porte-garniture 38, tournée vers le disque de frein. Autrement dit, l'angle aigu formé au repos entre le côté non parallèle 78 le plus proche du disque 18 et le plan du disque 18 devient nul pour un déplacement de l'élément de friction correspondant au jeu fonctionnel du frein à disque.

De la sorte, pour un déplacement de l'élément de friction supérieur au jeu fonctionnel, le côté 78 en contact avec la plaque porte-garniture 38, sera contraint de glisser sur l'arête 82, de même que le côté 78 situé de l'autre côté de la plaque porte-garniture, sollicité par la base 80.

A la fin de l'action de freinage, l'élément de friction sera ainsi ramené en arrière d'une valeur correspondant au jeu fonctionnel du frein, c'est-à-dire qu'il se retrouvera alors dans une position située légèrement en avant de celle qu'il occupait au début de l'action de freinage.

L'ensemble d'élément de friction selon l'invention permet ainsi un fonctionnement optimal du frein à disque tout au long de l'usure de la garniture de friction.

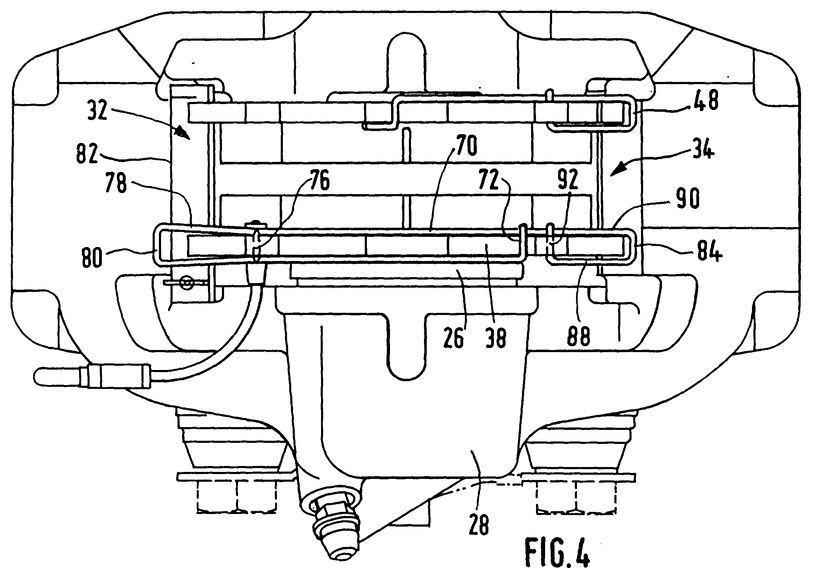

On a représenté sur les Figures 4 et 7 une variante de l'ensemble élément de friction-ressort décrit ci-dessus.

Selon cette variante, le ressort 62 est pourvu d'une partie de montage 64 et d'une partie active 68 identiques à celles qui ont été décrites, et la partie de maintien 66 est conformée pour remplir également la fonction du ressort anti-bruit 48.

A cet effet, la partie de maintien présente une portion sensiblement rectangulaire 86 dont les grands côtés 88 et 90 sont espacés d'une valeur légèrement supérieure à l'épaisseur de la plaque porte-garniture 38.

Le côté 90 constitue un prolongement du grand côté 70 de la partie de maintien 66. Un des petits côtés 84 exerce sur l'étrier 10 un effort sensiblement radial et l'autre petit côté 92 est disposé dans l'autre ouverture de montage 46 de la plaque porte-garniture, et est terminé par une patte 74' perpendiculaire au plan du ressort 62 au repos. L'action de la partie active 68 du ressort représenté sur la Figure 7 est identique à celle qui a été décrite en référence au ressort représenté sur la Figure 6.

On a représenté sur la Figure 8 une autre variante du ressort représenté sur la Figure 6. On a donné au ressort 62 une configuration symétrique, qui comporte deux parties de montage 64 et 64', destinées à être disposées chacune dans une des ouvertures de montage 46 de la plaque porte-garniture 38, deux parties actives 68 et 68' destinées à coopérer chacune, par ses côtés non parallèles avec les arêtes 82, 82' formées sur l'étrier 10, et une partie de maintien centrale 66 enserrant la plaque porte-garniture 38 et comportant une portion centrale 72' destinée à coopérer avec le bord périphérique extérieur 50 de la plaque porte-garniture 38.

L'action du ressort représenté sur la Figure 8 est identique à celle qui a été décrite en référence au ressort de la Figure 6, à ceci près que chaque partie active 68 et 68' assure à la fois la fonction de ressort anti-bruit sollicitant radialement l'élément de friction vers l'extérieur de l'étrier, et de ressort de rappel de l'élément de friction, qui est ainsi sollicité axialement en éloignement du disque par ses deux côtés à la fin de chaque action de freinage, d'une valeur inférieure ou égale au jeu fonctionnel du frein.

L'invention n'est pas limitée au mode de réalisation qui vient d'être décrit, mais est susceptible de recevoir de nombreuses modifications qui apparaîtront à l'homme de l'art. C'est ainsi que l'élément de friction extérieur 24 pourra être réalisé également conformément aux enseignements de la présente invention. C'est ainsi également que les côtés 78 du ressort 62, et/ou les arêtes 82, 82' de l'étrier, pourront recevoir un traitement favorisant leur maintien en contact pour des déplacements de l'élément de friction de valeur inférieure au jeu fonctionnel, tout en autorisant leur déplacement mutuel pour des déplacements de valeur supérieure au jeu fonctionnel. La section du fil constituant le ressort 62 pourra par exemple être triangulaire, carrée ou rectangulaire, et/ou des micro-encoches pourront être pratiquées sur les arêtes 82, 82'.

## Revendications

1. Ensemble d'un élément de friction équipé d'un ressort anti-bruit pour frein à disque, l'élément de friction (22, 24) comprenant une plaque porte-garniture (38) destinée à coopérer en ancrage et coulissement avec des surfaces de guidage (32, 34) formées sur un organe support de couple (10) d'un frein à disque au moyen d'encoches (42, 44) formées dans les bords latéraux de la plaque porte-garniture (38), le frein à disque comportant des moyens d'actionnement (26, 28) susceptibles de solliciter l'élément de friction (22, 24) contre un disque tournant (18), la plaque porte-garniture (38) comportant sur un bord périphérique extérieur (50) au niveau d'au moins une des encoches (42, 44) au moins une ouverture de montage (46) du ressort anti-bruit (48) coopérant avec la plaque porte-garniture (38) et l'organe support de couple (10) en direction radiale, caractérisé en ce que un organe élastique (62) coopère avec la plaque porte-garniture (38) et l'organe support de couple (10) pour solliciter en direction axiale la plaque porte-garniture (38) en éloignement du disque tournant (18), cet organe élastique (62) comportant une partie de montage (64) disposée dans une ouverture (46) de montage de la plaque porte-garniture (38), une partie de maintien (66) coopérant avec la plaque porte-garniture (38) et une partie active (68) coopérant avec l'organe support de couple (10), et présentant une portion sensiblement trapezoïdale comportant au moins une ouverture dont les côtés non parallèles (78) sont situés de part et d'autre de la plaque porte garniture (38) et coopèrent avec l'organe support de couple (10) et dont une base (76) pénètre dans l'ouverture de montage (46) de la plaque porte-garniture.

2. Ensemble selon la revendication 1, caractérisé en ce que la partie de maintien (66) de l'organe élastique (62) présente une portion sensiblement rectangulaire comportant au moins une ouverture dont deux côtés (70) sont placés au voisinage des faces de la plaque porte-garniture (38), un troisième côté (72) coopère avec le bord périphérique extérieur (50) de la plaque porte-garniture (38), et un quatrième côté (76) pénètre dans l'ouverture de montage (46) de la plaque porte-garniture (38).

3. Ensemble selon la revendication 1, caractérisé en ce que les côtés non parallèles (78) de l'organe élastique (62) coopèrent avec une arête (82, 82') formée sur l'organe support de couple (10).

4. Ensemble selon la revendication 3, caractérisé en ce que le côté non parallèle (78) de l'organe élastique (62) le plus proche du disque (18) forme avec le plan du disque (18) un angle aigu qui s'annule pour un déplacement de l'élément de friction (22, 24) correspondant au jeu fonctionnel du frein à disque.

5. Ensemble selon la revendication 3, caractérisé en ce que les côtés non parallèles (78) de l'organe élastique (62) glissent sur l'arête (82, 82') formée sur l'organe support de couple pour un déplacement de l'élément de friction (22, 24) supérieur au jeu fonctionnel du frein à disque.

6. Ensemble selon l'une des revendications précédentes, caractérisé en ce que la partie de maintien (66) de l'organe élastique (62) présente de plus une portion sensiblement rectangulaire (86) comportant au moins une ouverture dont deux côtés (88, 90) sont placés au voisinage des faces de la plaque porte-garniture (38), un côté est reçu dans une ouverture de montage (46) de la plaque porte-garniture (38) et un côté (84) exerce sur l'organe support de couple (10) un effort sensiblement radial.

7. Ensemble selon l'une des revendications 1 à 5, caractérisé en ce qu'il comporte deux parties actives (68, 68') coopérant chacune par ses côtés non parallèles (78, 78') avec une arête (82, 82') formée sur l'organe support de couple (10).

8. Frein à disque comportant un organe support de couple (10) auquel sont associés des moyens d'actionnement (26, 28) susceptibles de solliciter au moins un élément de friction (22, 24) contre un disque tournant (18), l'élément de friction (22, 24) comportant une plaque porte-garniture (38) sur laquelle est montée une garniture de friction (40), la plaque porte-garniture (38) coopérant en ancrage et coulissement avec des surfaces de guidage (32, 34) formées sur l'organe support de couple (10) au moyen d'encoches (42, 44) formées sur les bords radiaux s'étendant radialement de la plaque porte-garniture, au moins un ressort anti-bruit (48, 62) coopérant avec l'élément de friction (22, 24) et avec l'organe support de couple (10), la plaque porte-garniture (38) comportant au moins une ouverture de montage (46) du ressort anti-bruit (48, 62), caractérisé en ce que l'élément de friction (22, 24) et le ressort anti-bruit (48, 62) constituent un ensemble conforme à l'une quelconque des revendications 1 à 7.

## Patentansprüche

1. Baugruppe aus einem mit einer Anti-Lärm-Feder versehenen Reibelement für eine Scheibenbremse, wobei das Reibelement (22, 24) eine Belag-Trägerplatte (38) aufweist, die dafür vorgesehen ist, durch Einhängen und Verschieben mittels in den Seitenrändern der Belag-Trägerplatte (38) gebildeter Einschnitte (42, 44) mit Führungsflächen (32, 34), die an einem Momentenabstützorgan (10) einer Scheibenbremse gebildet sind, zusammenzuwirken, wobei die Scheibenbremse Betätigungsmittel (26, 28) aufweist, die das Reibelement (22, 24) gegen eine sich drehende Scheibe (18) beaufschlagen können, wobei die Belag-Trägerplatte (38) an einem Außenumfangsrand (50) auf der Höhe von wenigstens einem der Einschnitte (42, 44) wenigstens eine Montageöffnung (46) für die Anti-Lärm-Feder (48) aufweist, die mit der Belag-Trägerplatte (38) und dem Momentenabstützorgan (10) in radialer Richtung zusammenwirkt, dadurch gekennzeichnet, daß ein elastisches Organ (62) mit der Belag-Trägerplatte (38) und dem Momentenabstützorgan (10) zusammenwirkt, um die Belag-Trägerplatte (38) in axialer Richtung von der sich drehenden Scheibe (18) weg zu beaufschlagen, wobei dieses elastische Organ (62) einen Montgeabschnitt (64) aufweist, der in einer Montageöffnung (46) der Belag-Trägerplatte (38) angeordnet ist, sowie einen mit der Belag-Trägerplatte (38) zusammenwirkenden Halteabschnitt (66) und einen mit dem Momentenabstützorgan (10) zusammenwirkenden aktiven Abschnitt (68), und mit einem im wesentlichen trapezförmigen Bereich versehen ist, der wenigstens eine Öffnung aufweist, deren nicht-parallele Seiten (78) auf der einen und der anderen Seite der Belag-Trägerplatte (38) angeordnet sind und mit dem Momentenabstützorgan (10) zusammenwirken, und von dem eine Basis (76) in die Montageöffnung (46) der Belag-Trägerplatte eindringt.

2. Baugruppe nach Anspruch 1, dadurch gekennzeichnet, daß der Halteabschnitt (66) des elastischen Organs (62) einen im wesentlichen rechteckigen Bereich aufweist, der mit wenigstens einer Öffnung versehen ist, von der zwei Seiten (70) in der Nähe der Flächen der Belag-Trägerplatte (38) angeordnet sind, wobei eine dritte Seite (72) mit dem Außenumfangsrand (50) der Belag-Trägerplatte (38) zusammenwirkt und eine vierte Seite (76) in die Montageöffnung (46) der Belag-Trägerplatte (38) eindringt.

3. Baugruppe nach Anspruch 1, dadurch gekennzeichnet, daß die nichtparallelen Seiten (78) des elastischen Organs (62) mit einer Kante (82, 82') zusammenwirken, die an dem Momentenabstützorgan (10) gebildet ist.

4. Baugruppe nach Anspruch 3, dadurch gekennzeichnet, daß die der Scheibe (18) am nächsten liegende nichtparallele Seite (78) des elastischen Organs (62) mit der Ebene der Scheibe (18) einen spitzen Winkel bildet, der bei einer dem Funktionsspiel der Scheibenbremse entsprechenden Verstellung des Reibelementes (22, 24) zu Null wird.

5. Baugruppe nach Anspruch 3, dadurch gekennzeichnet, daß die nichtparallelen Seiten (78) des elastischen Organs (62) auf der an dem Momentenabstützorgan gebildeten Kante (82, 82') bei einer Verstellung des Reibelementes (22, 24) gleiten, die größer als das Funktionsspiel der Scheibenbremse ist.

6. Baugruppe nach einem der vorhergehenden Ansprüche, dadurch gekennzeichnet, daß der Halteabschnitt (66) des elastischen Organs (62) außerdem einen im wesentlichen rechteckigen Bereich (86) aufweist, der mit wenigstens einer Öffnung versehen ist, von der zwei Seiten (88, 90) in der Nähe der Flächen der Belag-Trägerplatte (38) angeordnet sind, wobei eine Seite in einer Montageöffnung (46) der Belag-Trägerplatte (38) aufgenommen ist und eine Seite (84) auf das Momentenabstützorgan (10) eine im wesentlichen radiale Kraft ausübt.

7. Baugruppe nach einem der Ansprüche 1 bis 5, dadurch gekennzeichnet, daß sie zwei aktive Abschnitte (68, 68') aufweist, die jeweils mit ihren nichtparallelen Seiten (78, 78') mit einer an dem Momentenabstützorgan (10) gebildeten Kante (82, 82') zusammenwirken.

8. Scheibenbremse mit einem Momentenabstützorgan (10), dem Betätigungsmittel (26, 28) zugeordnet sind, die wenigstens ein Reibelement (22, 24) gegen eine sich drehende Scheibe (18) beaufschlagen können, wobei das Reibelement (22, 24) eine Belag-Trägerplatte (38) aufweist, an der ein Reibbelag (40) angebracht ist, wobei die Belag-Trägerplatte (38) durch Einhängen und Verschieben mittels in den sich radial erstreckenden Seitenrändern der Belag-Trägerplatte gebildete Einschnitte (42, 44) mit an dem Momentenabstützorgan (10) gebildeten Führungsflächen (32, 34) zusammenwirkt, sowie eine Anti-Lärm-Feder (48, 62), die mit dem Reibelement (22, 24) und dem Momentenabstützorgan (10) zusammenwirkt, wobei die Belag-Trägerplatte (38) wenigstens eine Montageöffnung (46) für die Anti-Lärm-Feder (48, 62) aufweist, dadurch gekennzeichnet, daß das Reibelement (22, 24) und die Anti-Lärm-Feder (48, 62) eine Baugruppe nach einem der Ansprüche 1 bis 7 bilden.

## Claims

1. Assembly of a friction pad equipped with an anti-rattle spring for a disk brake, the friction pad (22, 24) comprising a lining carrier plate (38) intended to interact in anchoring and sliding with guide surfaces (32, 34) formed on a torque withstanding member (10) of a disk brake by means of slots (42, 44) formed in the lateral edges of the lining carrier plate (38), the disk brake including actuation means (26, 28) capable of stressing the friction pad (22, 24) against a rotating disk (18), the lining carrier plate (38) including, on an outer peripheral edge (50) level with at least one of the slots (42, 44) at least one opening (46) for mounting the anti-rattle spring (48) interacting with the lining carrier plate (38) and the torque withstanding member (10) in the radial direction, characterized in that an elastic member (62) interacts with the lining carrier plate (38) and the torque withstanding member (10) in order to urge the lining carrier plate (38) in the axial direction away from the rotating disk (18), this elastic member (62) including a mounting part (64) located in a mounting opening (46) of the lining carrier plate (38) and a holding part (66) interacting with the lining carrier plate (38) and an active part (68) interacting with the torque withstanding member (10), and having a substantially trapezoidal portion including at least one opening whose non-parallel sides (78) are situated on either side of the lining carrier plate (38) and interact with the torque withstanding member (10) and one base (76) of which penetrates into the mounting opening (46) of the lining carrier plate.

2. Assembly according to Claim 1 characterized in that the holding part (66) of the elastic member (62) has a substantially rectangular portion including at least one opening, two sides (70) of which are placed in the vicinity of the faces of the lining carrier plate (38) , a third side (72) interacts with the outer peripheral edge (50) of the lining carrier plate (38), and a fourth side (76) penetrates into the mounting opening (46) of the lining carrier plate (38).

3. Assembly according to Claim 1, characterized in that the non-parallel sides (78) of the elastic member (62) interact with a ridge (82, 82') formed on the torque withstanding member (10).

4. Assembly according to Claim 3, characterized in that the non-parallel side (78) of the elastic member (62) closest to the disk (18) forms, with the plane of the disk (18), an acute angle which is cancelled out for a displacement of the friction pad (22, 24) corresponding to the operational clearance of the disk brake.

5. Assembly according to Claim 3, characterized in that the non-parallel sides (78) of the elastic member (62) slide over the ridge (82, 82') formed on the torque withstanding member for a displacement of the friction pad (22, 24) which is greater than the operational clearance of the disk brake.

6. Assembly according to one of the preceding claims, characterized in that the holding part (66) of the elastic member (62) has, in addition, a substantially rectangular portion (86) including at least one opening, of which two sides (88, 90) are placed in the vicinity of the faces of the lining carrier plate (38), one side is received in a mounting opening (46) of the lining carrier plate (38) and one side (84) exerts a substantially radial force on the torque withstanding member (10).

7. Assembly according to one of Claims 1 to 5, characterized in that it includes two active parts (68, 68') each interacting via its non-parallel sides (78, 78') with a ridge (82, 82') formed on the torque withstanding member (10).

8. Disk brake including a torque withstanding member (10) with which are associated actuating means (26, 28) capable of stressing at least one friction pad (22, 24) against a rotating disk (18), the friction pad (22, 24) including a lining carrier plate (38) on which there is mounted a friction lining (40), the lining carrier plate (38) interacting in anchoring and sliding with guide surfaces (32, 34) formed on the torque withstanding member (10) by means of slots (42, 44) formed on the radial edges extending radially from the lining carrier plate, at least one anti-rattle spring (48, 62) interacting with the friction pad (22, 24) and with the torque withstanding member (10), the lining carrier plate (38) including at least one opening (46) for mounting the anti-rattle spring (48, 62), characterized in that the friction pad (22, 24) and the anti-rattle spring (48, 62) constitute an assembly in accordance with any one of Claims 1 to 7.
